# EUROPEAN PATENT APPLICATION

(11) **EP 4 517 977 A1**
(43) Date of publication of application: **05.03.2025**
(21) Application number: 23795027.4
(22) Date of filing: 12.04.2023
(51) Int. Cl.: H01M 50/244, H01M 50/249, H01M 50/289

(54) **ELECTRIC DEVICE AND BATTERY THEREOF**

(30) Priority: 26.04.2022 CN 202220978036 U
(71) Applicant: Contemporary Amperex Technology Co., Limited, Ningde, Fujian 352100 (CN)
(72) Inventor: CHEN, Yifeng, Ningde, Fujian 352100 (CN); LIAO, Xiping, Ningde, Fujian 352100 (CN); HUANG, Yangzhi, Ningde, Fujian 352100 (CN); WANG, Yongguang, Ningde, Fujian 352100 (CN); TANG, Yihan, Ningde, Fujian 352100 (CN)
(74) Representative: Ran, Handong
(86) International application number: PCT/CN2023/087801
(87) International publication number: WO 2023/207594

(57) **Abstract**

The present application relates to an electric device and a battery (100) thereof. The battery (100) comprises: a housing (10); a battery unit (20) comprising a first battery sub-unit (21) and a second battery sub-unit (22), the first battery sub-unit (21) and the second battery sub-unit (22) being arranged side by side in the housing (10), a glue filling region (11) being formed between the first battery sub-unit (21) and the second battery sub-unit (22), and the glue filling region (11) being filled with glue; and a glue combing member (30), which is at least partially disposed in the glue filling region (11), such that the glue connects the first battery sub-unit (21) and the second battery sub-unit (22) by means of bonding the glue comb. By means of the electric device and the battery (100) thereof provided in the present application, the amount of glue in the assembly process of the battery (100) can be reduced.

## Description

### CROSS-REFERENCE TO RELATED APPLICATION

This application claims a priority to Chinese Patent Application No. 2022209780367, titled "ELECTRIC DEVICE AND BATTERY FOR SAME", and filed with China National Intellectual Property Administration on April 26, 2022, the entire contents of which are incorporated herein by reference.

### FIELD

The present disclosure relates to the technical field of batteries, and more particularly, to an electric device and a battery thereof.

### BACKGROUND

Energy-saving and emission-reduction is the key to the sustainable development of the automobile industry. Electric vehicles have become an important part of the sustainable development of the automobile industry due to the advantages of energy saving and environmental protection. For electric vehicles, battery technology is an important factor related to their development.

The battery includes a housing and a battery unit disposed in the housing, and all members in the battery unit are connected through glue. In a conventional assembly process of the battery, a large amount of glue is used, resulting in a high assembly cost of the battery.

### SUMMARY

In view of the above problems, the present disclosure provides an electric device and a battery thereof, which can reduce an amount of glue used in a battery assembly process.

In a first aspect, the present disclosure provides the battery. The battery includes: a housing; a battery unit including a first battery sub-unit and a second battery sub-unit arranged side by side in the housing, a glue filling region being formed between the first battery sub-unit and the second battery sub-unit, and the glue filling region being filled with glue; and a glue comb at least partially disposed in the glue filling region to connect the first battery sub-unit with the second battery sub-unit by adhering glue to the glue comb.

For the electric device and the battery thereof, since the glue comb is at least partially arranged in the glue filling region and can occupy a part of a space of the glue filling region, two battery sub-units can be indirectly connected through the glue comb and adhesive. In this way, the amount of glue used to fill the glue filling region can be reduced, thereby reducing the assembly cost.

In some embodiments, the glue comb has a first surface facing towards the first battery sub-unit and a second surface facing towards the second battery sub-unit. The first battery sub-unit is connected with the second battery sub-unit by adhering glue to the first surface and the second surface.

The first battery sub-unit is connected with the second battery sub-unit by adhering glue to the first surface and the second surface. Compared with the glue provided between the first surface and the first battery sub-unit or between the second surface and the second battery sub-unit, better adhesion between the first battery sub-unit and the second battery sub-unit can be achieved, thereby contributing to the improvement of the integrity of the battery unit.

In some embodiments, the glue comb is provided with a glue passage portion configured to penetrate from the first surface to the second surface.

The glue passage portion can communicate spaces formed at two sides of the glue comb, allowing adhesive at the two sides of the glue comb to form convection through the glue passage portion before being solidified. In this way, the glue on the two sides of the glue comb is more evenly distributed to improve the adhesive reliability between the glue comb and the first battery sub-unit and the second battery sub-unit.

In some embodiments, the housing includes a base plate configured to support the battery unit, and the glue passage portion includes a glue passage groove extending to the base plate in a height direction of the glue comb.

By designing the glue passage groove to extend to the base plate in the height direction of the glue comb, convection can be ensured through the glue passage groove when the adhesive at the two sides of the glue comb has different heights. Therefore, the distribution uniformity of the glue at the two sides of the glue comb can be further improved.

In some embodiments, the glue passage portion includes a plurality of glue passage holes. At least two of the plurality of glue passage holes are arranged at intervals in the height direction of the glue comb.

Before the adhesive solidifies to form the glue, the adhesive at two sides of the glue comb can realize convection through all glue passage holes whose height is lower than an adhesive glue liquid level. Therefore, before the adhesive solidifies, the adhesive is ensured to be evenly distributed at the two sides of the glue comb. In addition, the plurality of glue passage holes is arranged at intervals in the height direction to increase rates at which adhesive flows through the glue passage holes to similar adhesive at the two sides when there is more adhesive at one side or when there is more adhesive at the two sides.

In some embodiments, the glue comb includes an insulating material The first battery sub-unit includes a body and an insulating shell. The insulating shell is attached to the body. The insulating shell has an opening formed at a surface of the insulating shell facing towards the glue comb. The body is exposed from the opening.

Compared to the insulating material, the body with a metal surface has stronger adhesion. Therefore, the glue can contact the metal surface of the body through the opening on the insulating shell, allowing the glue to firmly adhere to an exposed part of the body. In this way, the adhesive reliability between the first battery sub-unit, the glue, and the glue comb can be improved.

In some embodiments, in a penetration direction of the glue portion, a region of the insulating shell excluding the opening has a projection on the glue comb. The projection completely covers the glue passage portion.

The body and the second battery sub-unit can have sufficient electrical clearance and creepage distance under the obstruction of the insulating shell. As a result, even under special circumstances, a first battery cell and the second battery sub-unit cannot conduct between each other, thereby providing better safety for the battery.

In some embodiments, the housing includes a base plate configured to support the battery unit. The glue comb is spaced apart from the base plate in a second direction perpendicular to the base plate and defines a glue passage with the base plate.

Therefore, under this design, the resistance in the adhesive flow process can be reduced, which enables the adhesive at the two sides of the glue comb to more easily realize convection through the glue passage.

In some embodiments, the housing includes a base plate. The first battery sub-unit and the second battery sub-unit are arranged side by side on the base plate in a first direction. In a direction towards the base plate, the glue comb gradually decreases in size in the first direction.

With this design, the glue comb can be quickly inserted into the glue filling region between the first battery sub-unit and the second battery sub-unit, thus enhancing the assembly efficiency of the battery.

In some embodiments, the glue comb includes a glue combing portion and a position-limiting portion. The glue combing portion is at least partially disposed in the glue filling region. The position-limiting portion is disposed at the glue combing portion and configured to limit displacement of the glue combing portion.

By providing the position-limiting portion, the displacement of the glue combing portion can be limited. The position-limiting portion eliminates the need to use other fixing members to fix the glue comb when the adhesive is solidified, and the glue comb itself has excellent mounting stability.

In some embodiments, the housing includes a base plate configured to support the battery unit. The position-limiting portion is disposed at an end of the glue combing portion away from the base plate, and in an overlap joint with an end surface of the first battery sub-unit and/or an end surface of the second battery sub-unit away from the base plate to limit the displacement of the glue combing portion.

The position-limiting portion is directly in an overlap joint with at least one of the first battery cell and the second battery sub-unit. While ensuring that the glue comb is mounted stably, a high mounting efficiency is also achieved, thereby enabling the assembly efficiency of the battery to be effectively enhanced. In addition, this method does not require destroying a structure of the first battery sub-unit and/or the second battery sub-unit, and enables the first battery sub-unit and the second battery sub-unit to maintain better operating reliability.

In some embodiments, the housing includes a base plate configured to support the battery unit. The battery further includes a sealing member sealingly arranged between the first battery sub-unit and the base plate and/or sealingly arranged between the second battery sub-unit and the base plate.

The sealing member is provided to prevent the glue located in the glue filling region from overflowing into a gap between the first battery sub-unit and/or the second battery sub-unit provided on the sealing member and the base plate before being solidified. Therefore, the glue poured into the glue filling region can be gathered in the glue filling region, allowing the first battery cell and the second battery sub-unit to have a better adhesive reliability.

In some embodiments, the first battery sub-unit and the second battery sub-unit are arranged side by side in a first direction. Each of the first battery sub-unit and the second battery sub-unit includes a plurality of battery cells arranged side by side in a third direction perpendicular to the first direction. The third direction is a thickness direction of the plurality of battery cells.

In this embodiment, the battery has a higher energy density to meet a large capacitance requirement of the electric device.

In a second aspect, the present disclosure provides the electric device including the battery of the above embodiment. The battery is configured to supply electrical energy to the electric device.

The above description is merely an overview of the technical solutions of the present disclosure. To facilitate a clear understanding of technical means of the present disclosure to implement the technical solutions in accordance with the contents of the specification, and to clarify and explain the above and other objects, features, and advantages of the present disclosure, specific embodiments of the present disclosure will be described below.

### BRIEF DESCRIPTION OF THE DRAWINGS

Various other advantages and benefits will become apparent to those skilled in the art after reading the detailed description of embodiments given below. The accompanying drawings are used for a purpose of illustrating the embodiments only, rather than limiting the present disclosure. In addition, same elements are denoted by same reference numerals throughout the accompanying drawings. In the accompanying drawings:
FIG. 1 is a schematic view of a structure of a vehicle according to some embodiments of the present disclosure;
FIG. 2 is a schematic view of an internal structure of a battery without a top plate according to an embodiment of the present disclosure;
FIG. 3 is an enlarged schematic view of a partial structure A in the battery shown in FIG. 2;
FIG. 4 is an exploded view of the battery shown in FIG. 2;
FIG. 5 is an enlarged schematic view of a partial structure B in the battery shown in FIG. 4;
FIG. 6 is a side view of a glue comb in the battery shown in FIG. 4.

Reference numerals of the accompanying drawings:
1000, vehicle;
100, battery; 200, controller; 300, motor;
10, housing; 11, glue filling region; 12, base plate; 20, battery unit; 21, first battery sub-unit; 211, body; 212, insulating shell; 2121, opening; 213, battery cell; 22, second battery sub-unit; 23, battery sub-unit; 30, glue comb; 31, glue combining portion; 311, glue passage portion; 312, glue passage groove; 313, glue passage hole; 314, first surface; 315, second surface; 32, position-limiting portion; 40, sealing member.

### DETAILED DESCRIPTION OF THE EMBODIMENTS

In order to make the above-mentioned objects, features, and advantages of the present disclosure more obvious and comprehensive, a detailed description of specific embodiments of the present disclosure will be given below in conjunction with the accompanying drawings. In the following description, many specific details are provided to facilitate a full understanding of the present disclosure. However, the present disclosure can be implemented in many other ways than those described herein, and similar improvements can be made by those skilled in the art without contradicting the intent of the present disclosure. Therefore, the present disclosure is not limited by specific embodiments disclosed below.

In the description of the present disclosure, it should be understood that the orientation or position relationship indicated by terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" should be construed to refer to the orientation or the position as shown in the drawings, and is only for the convenience of describing the present disclosure and simplifying the description, rather than indicating or implying that the pointed apparatus or element must have a specific orientation, or be constructed and operated in a specific orientation, and therefore cannot be understood as a limitation of the present disclosure.

In addition, terms "first" and "second" are only used for descriptive purposes, and cannot be understood as indicating or implying relative importance or implicitly indicating the number of the indicated technical features. Therefore, the features associated with "first" and "second" may explicitly or implicitly include at least one of the features. In the description of the present disclosure, "plurality" means at least two, unless otherwise specifically defined.

In the present disclosure, unless otherwise clearly specified and limited, terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two members or the interaction relationship between two members, unless otherwise clearly limited. For those skilled in the art, the specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

It should be noted that when an element is said to be "fixed to" or "set to" another element, it may be directly on the other element or there may be a centered element. When an element is considered to be "connected to" another element, it may be directly connected to the other element or there may be an intervening element. The terms "vertical", "horizontal", "upper", "lower", "left", "right", and the like are used herein for illustrative purposes only and are not meant to be the only embodiments.

At present, from the perspective of the development of the market situation, the application of batteries is more and more extensive. The battery is not only used in energy storage power systems such as hydro, thermal, wind, and solar power stations, but also widely used in electric bicycles, electric motorcycles, electric cars, and other electric vehicles, as well as military equipment, aerospace, and other fields. With the continuous expansion of the application field of a power battery, the market demand is also expanding.

The battery includes a housing and a battery unit disposed in the housing. The battery unit at least includes a first battery sub-unit and a second battery sub-unit arranged in the housing side by side. The first battery sub-unit and the second battery sub-unit are connected through glue. A traditional glue pouring method is that liquid adhesive is poured between the first battery sub-unit and the second battery sub-unit. When the liquid adhesive is solidified to form glue, the first battery sub-unit and the second battery sub-unit can be fixedly connected. In this way, the first battery sub-unit and the second battery sub-unit can form a whole.

To satisfy the connection strength between the first battery sub-unit and the second battery sub-unit, a glue height between the first battery sub-unit and the second battery sub-unit needs to at least reach a predetermined height. It is noticed that when the glue height reaches the predetermined height, a large amount of glue is used, resulting in a high assembly cost of the battery.

Based on the above considerations, the inventor has designed a battery through intensive research. A glue comb is disposed between the first battery sub-unit and the second battery sub-unit, and can occupy a gap space between the first battery sub-unit and the second battery sub-unit. The two units are connected in a manner from the first battery sub-unit to the adhesive to the glue comb to the adhesive to the second battery sub-unit. When the connection strength can be satisfied, it is possible to reduce the amount of glue used between the first battery sub-unit and the second battery sub-unit, thereby reducing the assembly cost.

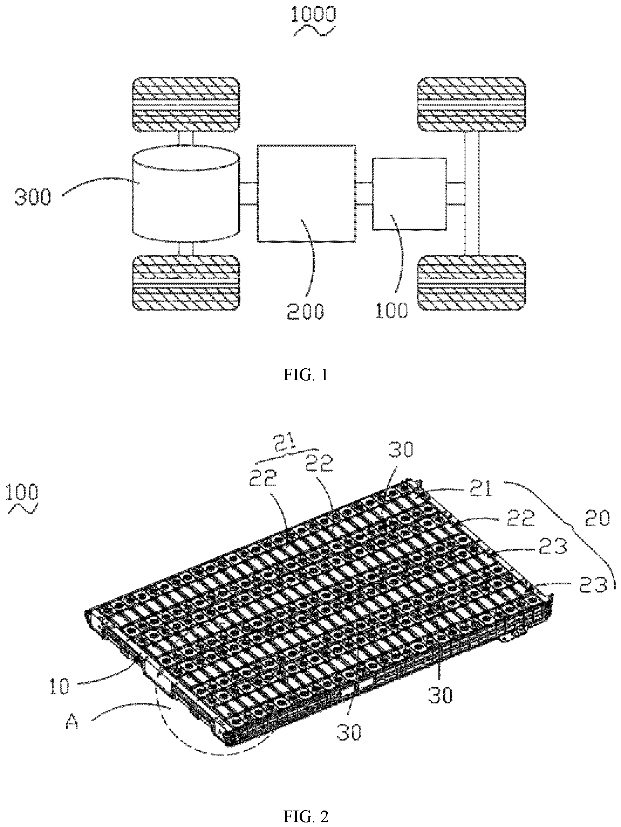

Referring to FIG. 1, a battery 100 disclosed in the embodiments of the present disclosure may be, but is not limited to, used in an electric device such as a vehicle 1000, a ship, or an aircraft. The battery 100 disclosed in the present disclosure can be used to form a power supply system for the electric device, which is conducive to reducing the assembly cost of the electric device.

The embodiments of the present disclosure provide the electric device. The electric device includes the battery 100 and uses the battery 100 as a power source. The battery 100 is configured to provide electric energy for the electric device. The electric device may be, but is not limited to, a mobile phone, a tablet, a notebook computer, an electric toy, an electric tool, a battery car, an electric automobile, a ship, a spacecraft, and the like. The electric toy may include a stationary or mobile electric toy, such as a game machine, an electric car toy, an electric ship toy, an electric airplane toy, etc., and the spacecraft may include an airplane, a rocket, a space shuttle, a spacecraft, and the like.

For the convenience of explanation, the following embodiments take an electric device of an embodiment of the present disclosure as a vehicle 1000 for example.

The vehicle 1000 may be a fuel vehicle, a gas vehicle, or a new energy vehicle, and the new energy vehicle may be a pure electric vehicle, a hybrid vehicle, or an extended-range vehicle. The battery 100 is disposed in the vehicle 1000, and the battery 100 may be disposed at a bottom or a head or a tail of the vehicle 1000. The battery 100 may be configured to supply power to the vehicle 1000, for example, the battery 100 may serve as an operating power source of the vehicle 1000. The vehicle 1000 may further include a controller 200 and a motor 300. The controller 200 is configured to control the battery 100 to supply power to the motor 300, for example, for operating power demand during starting, navigation, and driving of the vehicle 1000.

In some embodiments of that present disclosure, the battery 100 may be used not only as an operating power source for the vehicle 1000, but also as a driving power source for vehicle 1000. The battery 100 replaces or partially replaces fuel oil or natural gas to provide driving power for the vehicle 1000.

Referring to FIG. 2, the battery 100 in the present disclosure includes a housing 10, a battery unit 20, and a glue comb 30, and the battery unit 20 and the glue comb 30 are disposed in the housing 10.

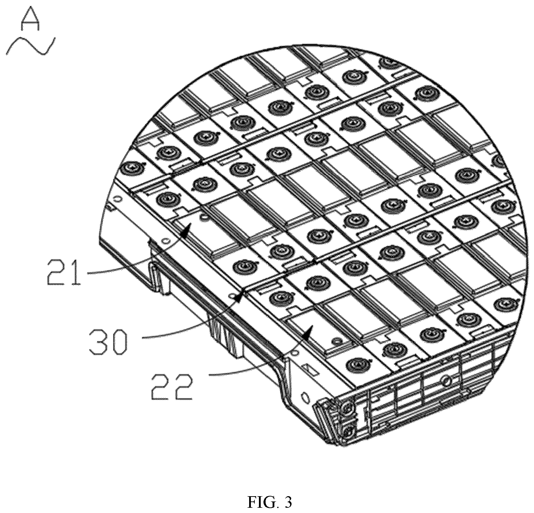

Referring to FIG. 3, FIG. 4, and FIG. 5, the battery unit 20 includes a first battery sub-unit 21 and a second battery sub-unit 22 arranged side by side in the housing 10. A glue filling region 11 is formed between the first battery sub-unit 21 and the second battery sub-unit 22, and the glue filling region 11 is filled with glue. The glue comb 30 is at least partially disposed in the glue filling region 11 to connect the first battery sub-unit 21 with the second battery sub-unit 22 by adhering glue to the glue comb 30.

The battery unit 20 includes at least two battery sub-units 23, and all battery sub-units 23 are sequentially arranged side by side in a first direction X. All battery sub-units 23 may be the same, or any two of them may be different, or there may be two battery sub-units 23 that are the same or two battery sub-units 23 that are different. Same means identical in structure, and different means different in structure.

The first battery sub-unit 21 and the second battery sub-unit 22 are respectively named by two battery sub-units 23 which are arbitrarily adjacent and arranged at intervals in the battery unit 20. The first battery sub-unit 21 and the second battery sub-unit 22 may be the same or different. In addition, the first battery sub-unit 21 may be located on any one side of the second battery sub-unit 22 in the first direction X, which may be arranged based on specific circumstances.

For example, in an embodiment that the battery unit 20 includes only two battery sub-units 23, the two battery sub-units 23 are the first battery sub-unit 21 and the second battery sub-unit 22, respectively. For another example, in the embodiment that the battery unit 20 includes N battery sub-units 23 arranged side by side in the first direction X, the N battery sub-units 23 are sequentially named as a first battery sub-unit 23, a second battery sub-unit 23,..., an Nth battery sub-unit 23. The first battery sub-unit 21 and the second battery sub-unit 22 are any two battery sub-units 23 adjacent to each other among the N battery sub-units 23. For example, the first battery sub-unit 21 is the first battery sub-unit 23, and the second battery sub-unit 22 is the second battery sub-unit 23. For example, the first battery sub-unit 21 is a (N-1)th battery sub-unit 23, and the second battery sub-unit 22 is a Nth battery sub-unit 23. For another example, the first battery sub-unit 21 and the second battery sub-unit 22 are two battery sub-units 23 adjacent to each other between the first battery sub-unit 23 and the Nth battery sub-unit 23, respectively. For example, the first battery sub-unit 21 is a (N-6)th battery sub-unit 23, and the second battery sub-unit 22 is a (N-5)th battery sub-unit 23.

In some of the above embodiments, for all the battery sub-units 23 excluding the first battery sub-unit 21 and the second battery sub-unit 22, any two of the battery sub-units 23 may be spaced apart from each other. There may be two adjacent battery sub-units 23 spaced apart from each other, and there may further be two adjacent battery sub-units 23 arranged closely. Or the battery sub-units 23 may be arranged closely, and specific settings may be made based on requirements. In addition, excluding the second battery sub-unit 22, the other battery sub-units 23 adjacent to the first battery sub-unit 21 and the first battery sub-unit 21 are arranged at intervals or closely arranged, which is not specifically limited. Excluding the first battery sub-unit 21, the other battery sub-units 23 adjacent to the second battery sub-unit 22 and the second battery sub-unit 22 are arranged at intervals or closely arranged, which is not specifically limited. It is only necessary to ensure that the first battery sub-unit 21 and the second battery sub-unit 22 are spaced apart and able to provide the glue comb 30.

The glue is formed by solidifying the liquid adhesive.

In the present disclosure, since the glue comb 30 is at least partially disposed in the glue filling region 11 and can occupy a part of a space of the glue filling region 11, when the glue height can be guaranteed to reach the predetermined height, i.e., a connection between the two battery sub-units 23 can be indirectly realized through the glue comb 30 and the glue, the amount of glue used to be filled in the glue filling region 11 can be reduced, reducing the assembly cost.

The housing 10 includes the base plate 12, and the glue height refers to a distance between the farthest surface of the glue from the base plate 12 and the base plate 12.

The base plate 12 may be a liquid cooling plate. The housing 10 in the present disclosure may further include a side plate and a top plate in addition to the base plate 12. The side plate is disposed in a circumferential direction of the base plate 12. The top plate is disposed at an end of the side plate away from the base plate 12. The base plate 12, the side plate, and the top plate together enclose a storage space for storing the battery unit 20 and the glue comb 30.

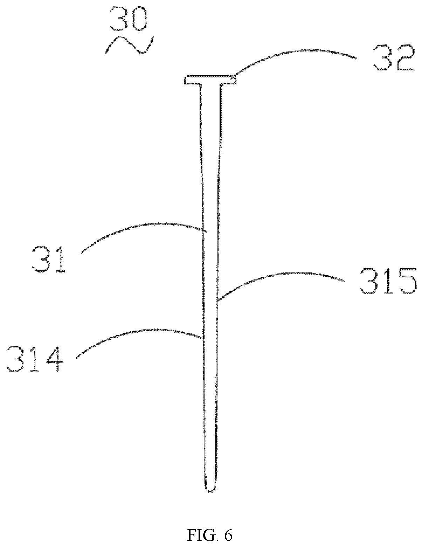

Referring to FIG. 6, in some embodiments of the present disclosure, a first surface 314 of the glue comb 30 may be attached to the first battery sub-unit 21, and glue may be poured between a second surface 315 and the second battery sub-unit 22. Alternatively, the second surface 315 of the glue comb 30 may be attached to the second battery sub-unit 22, and glue may be poured between the first surface 314 and the first battery sub-unit 21.

In some embodiments of the present disclosure, the glue comb 30 has a first surface 314 facing towards the first battery sub-unit 21 and a second surface 315 facing towards the second battery sub-unit 22. The first battery sub-unit 21 is connected with the second battery sub-unit 22 by adhering glue to the first surface 314 and the second surface 315.

In an assembling process, the liquid adhesive may be poured into the glue filling region 11, and then the glue comb 30 is placed in the glue filling region 11 to allow the liquid adhesive to be distributed to the two sides of the glue comb 30 and to adhere to the first battery sub-unit 21 and the second battery sub-unit 22 after solidifying to form the glue. Alternatively, the glue comb 30 may be placed in the glue filling region 11, and then the liquid adhesive is poured into the two sides of the glue comb 30. The liquid adhesive is solidified to form the glue, realizing a fixed connection between the first battery sub-unit 21, the glue comb 30, and the second battery sub-unit 22.

The first battery sub-unit 21 is connected with the second battery sub-unit 22 by adhering glue to the first surface 314 and the second surface 315. Compared with the glue disposed between the first surface 314 and the first battery sub-unit 21 or between the second surface 315 and the second battery sub-unit 22, the first battery sub-unit 21 can be enabled to have a better adhesive fastness between the first battery sub-unit 21 and the second battery sub-unit 22, thereby contributing to enhancing the integrity of the battery unit 20.

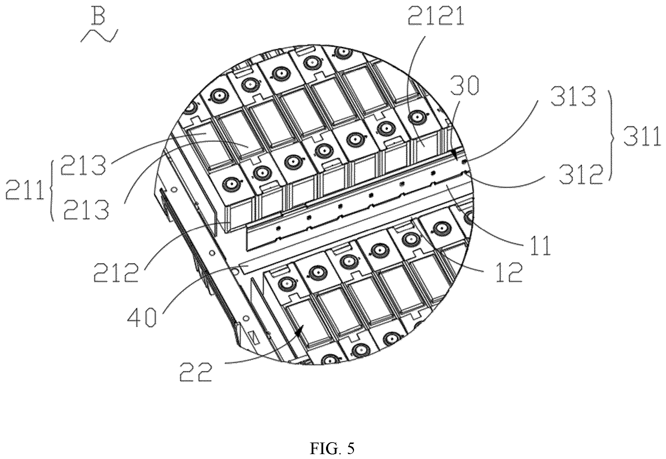

Referring to FIG. 5 and FIG. 6, in some embodiments of the present disclosure, the glue comb 30 is provided with a glue passage portion 311 configured to penetrate from the first surface 314 to the second surface 315.

Generally, a penetration direction of the first surface 314 and the second surface 315 may be a thickness direction of the glue comb 30, or may intersect with the thickness direction of the glue comb 30. In the following embodiments, the penetration direction of the first surface 314 and the second surface 315, i.e., the thickness direction of the glue comb 30, is taken as an example for description.

**In** another exemplary embodiment of the present disclosure, the glue passage portion 311 may have at least one of a through-hole, a through-groove, and the like. A height of glue passage portion 311 can be set as needed. For example, the height of glue passage portion 311 may be lower than a predetermined height or equal to the predetermined height. The housing 10 includes the base plate 12, and the height of the glue passage portion 311 refers to a height from the lowest point of the glue passage portion 311 to the base plate 12 in a direction perpendicular to the base plate 12.

The glue passage portion 311 can communicate the spaces formed at the two sides of the glue comb 30, allowing the adhesive at the two sides of the glue comb 30 to form convection through the glue passage portion 311 before being solidified. In this way, the glue on the two sides of the glue comb 30 is more evenly distributed to improve the adhesive reliability between the glue comb 30, the first battery sub-unit 21, and the second battery sub-unit 22.

**In** some embodiments of the present disclosure, the housing 10 includes a base plate 12 configured to support the battery unit 20, and the glue passage portion 311 includes a glue passage groove 312 extending to the base plate 12 in a height direction of the glue comb 30.

It can be understood that the base plate 12 is a structure with the lowest position in the battery 100. Heights of other members except the base plate 12 in the battery 100 are greater than a height of the base plate 12. The height direction of each member except the base plate 12 in the battery 100 refers to a direction in which a surface of the member farthest from the base plate 12 points to a surface of the member closest to the base plate 12.

In another exemplary embodiment of the present disclosure, one or more glue passage grooves 312 may be provided. When a plurality of glue passage grooves 312 is provided, the plurality of glue passage grooves 312 may be arranged at intervals in a lengthwise direction of the glue comb 30. The lengthwise direction of the glue comb 30 is an extending direction of the glue comb 30, and the lengthwise direction of the glue comb 30 is perpendicular to both the height direction and the thickness direction of the glue comb 30.

By designing the glue passage groove 312 to extend to the base plate 12 in the height direction of the glue comb 30, convection can be ensured through the glue passage groove 312 when the heights of adhesive at the two sides of the glue comb 30 are different. Therefore, the uniformity of glue distributed at the two sides of the glue comb 30 can be further improved.

In some embodiments of the present disclosure, the glue passage portion 311 includes a plurality of glue passage holes 313. At least two of the plurality of glue passage holes 313 are arranged at intervals in the height direction of the glue comb 30.

For example, some of the glue passage holes 313 may be arranged at intervals in the height direction of the glue comb 30, and the rest of the glue passage holes 313 may be arranged continuously or at intervals in the lengthwise direction of the glue comb 30. Alternatively, all glue passage holes 313 may be arranged at intervals in the height direction of the glue comb 30. For another example, at least two rows of glue passage holes 313 may be provided. The glue passage holes 313 in all rows are arranged at intervals in the height direction of the glue comb 30. Each row of glue passage holes 313 includes a plurality of glue passage holes 313. All glue passage holes 313 in each row are arranged at intervals or continuously in the lengthwise direction of the glue comb 30.

It is worth mentioning that since the glue height must eventually reach at least the predetermined height, that is, the glue height may be equal to or higher than the predetermined height. Therefore, heights of all glue passage holes 313 can be set to be lower than the predetermined height, allowing the glue to perform adhesive convection through all glue passage holes 313 before reaching the predetermined height. Alternatively, heights of some glue passage holes 313 may be set to be lower than the predetermined height, and heights of some glue passage holes 313 may be set to be equal to the predetermined height. In this way, a glue passage hole 313 whose height is consistent with the predetermined height can mark the glue height to indicate to the user whether the glue is sufficient.

Before the adhesive solidifies to form the glue, the adhesive at the two sides of the glue comb 30 can realize convection through all glue passage holes 313 whose height is lower than an adhesive liquid level. Therefore, the glue comb 30 has a better pass glue efficiency. Therefore, before the adhesive solidifies, the adhesive can be evenly distributed at the two sides of the glue comb 30. In addition, the plurality of glue passage holes 313 is arranged at intervals in the height direction to increase rates at which adhesive flows through the glue passage holes 313 to similar adhesive at the two sides when there is more adhesive at one side or when there is more adhesive at the two sides.

In an embodiment, the glue comb 30 includes an insulating material, and the first battery sub-unit 21 includes a body 211 and an insulating shell 212. The insulating shell 212 is attached to the body 211, and the insulating shell 212 has an opening 2121 formed at a surface of the insulating shell 212 facing towards the glue comb 30. The body 211 is exposed from the opening 2121.

In an exemplary embodiment of the present disclosure, the insulating shell 212 may be formed from insulating materials such as plastic, cardboard, glass, etc. The insulating shell 212 may be a member such as an insulating film, an insulating plate, or an insulating sheet.

Compared with the insulating material, an adhesion ability of the body 211 with a metal surface is stronger. Therefore, the glue can contact the metal surface of the body 211 through the opening 2121 on the insulating shell 212. Therefore, the glue can firmly adhere to a part of the body 211 exposed from the opening 2121, which helps to improve the adhesion between the first battery sub-unit 21, the glue, and the glue comb 30.

In some embodiments of the present disclosure, in a penetration direction of the glue portion 311, a region of the insulating shell 212 excluding the opening 2121 has a projection on the glue comb 30. The projection completely covers the glue passage portion 311.

In other words, in the penetration direction of the glue passage portion 311, the opening 2121 on the insulating shell 212 is completely misaligned with the glue passage portion 311 on a glue passage member.

Since air may exist inside the glue, when the body 211 in the first battery sub-unit 21, the opening 2121 of the insulating shell 212 in the first battery sub-unit 21, a part of the glue attached to the first surface 314 of the glue comb 30 where air exists, the glue passage portion 311 of the glue comb 30, a part of the glue attached to the second surface 315 of the glue comb 30 where air exists, and the second battery sub-units 22 are arranged in a straight line in the penetrating direction of the glue passage portion 311, conduction between the body 211 of the first battery cell 213, and the second battery sub-unit 22 may occur under special circumstances, resulting in a poor safety of the battery unit 20.

In the present disclosure, since the region of the insulating shell 212 excluding the opening 2121 has the projection on the glue comb 301, and the projection completely covers the glue passage portion 311, the body 211 and the second battery sub-unit 22 can have sufficient electrical clearance and creepage distance under the obstruction of the insulating shell 212. As a result, even under special circumstances, a first battery cell 223 and the second battery sub-unit 22 cannot conduct between each other, thereby providing better safety for the battery 100.

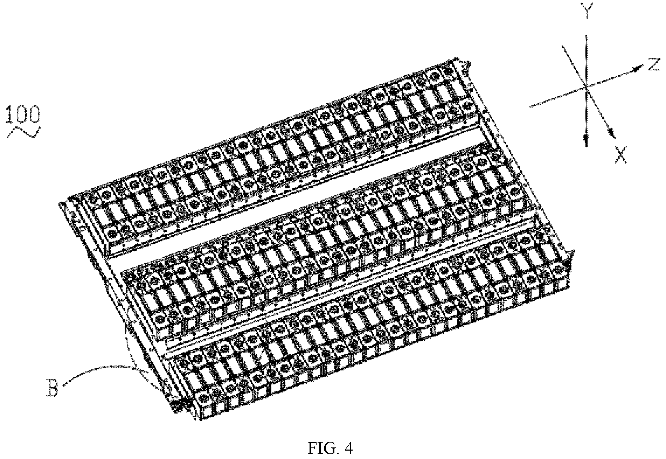

Referring to FIG. 4 and FIG. 5, in an embodiment, the housing 10 includes a base plate 12 configured to support the battery unit 20. The glue comb 30 is spaced apart from the base plate 12 in a second direction Y perpendicular to the base plate 12 and defines a glue passage with the base plate 12.

In such an embodiment, the glue passage has a larger span than the glue passage portion 311 described above. The glue passage with a larger span has a larger caliber compared to the glue passage portion 311.

Therefore, under this design, the resistance in the adhesive flow process can be reduced, which enables the adhesive at the two sides of the glue comb 30 to more easily realize convection through the glue passage.

In some embodiments of the present disclosure, the housing 10 includes a base plate 12. The first battery sub-unit 21 and the second battery sub-unit 22 are arranged side by side on the base plate 12 in a first direction X. In a direction towards the base plate 12, the glue comb 30 gradually decreases in size in the first direction X

For example, the glue comb 30 can be in shape of a wedge, tapered, triangular, etc. The glue comb 30 has a large end and a small end, and the small end of the glue comb 30 is disposed adjacent to the base plate 12 compared to the large end.

With this design, the glue comb 30 can be quickly inserted into the glue filling region 11 between the first battery sub-unit 21 and the second battery sub-unit 22, thus enhancing the assembly efficiency of the battery 100.

Referring to FIG. 6, in some embodiments of the present disclosure, the glue comb 30 includes a glue combining portion 31 and a position-limiting portion 32. The glue combining portion 31 is at least partially disposed in the glue filling region 11. The position-limiting portion 32 is disposed at the glue combining portion 31 configured to limit displacement of the glue combining portion 31.

In this embodiment, the glue combining portion 31 is a part of the glue comb 30 where the glue passage portion 311 is provided. In the direction towards the base plate 12, the glue comb 30 gradually decreases in size in the first direction X. The first surface 314 and the second surface 315 are two surfaces of the glue combining portion 31 opposite to each other.

The position-limiting portion 32 may be disposed at an end of the glue combining portion 31 away from the base plate 12, or may be disposed between two ends of the glue combining portion 31.

By providing the position-limiting portion 32, the displacement of the glue combing portion 31 can be limited. The position-limiting portion 32 eliminates the need to use other fixing members to fix the glue comb 30 when the adhesive is solidified, and the glue comb 30 itself has excellent mounting stability.

In some embodiments of the present disclosure, the housing 10 includes a base plate 12 configured to support the battery unit 20. The position-limiting portion 32 is disposed at an end of the glue combining portion 31 away from the base plate 12 and in an overlap joint with an end surface of the first battery sub-unit 21 and/or an end surface of the second battery sub-unit 22 away from the base plate 12 to limit the displacement of the glue combining portion 31.

For example, the position-limiting portion 32 and the glue combining portion 31 may be connected and combined to form a "7"-shape. The position-limiting portion 32 may be in an overlap joint with the end surface of the first battery sub-unit 21 or the end surface of the second battery sub-unit 22 away from the base plate 12. For example, the position-limiting portion 32 and the glue combining portion 31 may be connected and combined to form a T-shape. Opposite ends of the position-limiting portion 32 are in an overlap joint with the end surface of the first battery sub-unit 21 and the end surface of the second battery sub-unit 22 away from the base plate 12, respectively.

The position-limiting portion 32 is directly in an overlap joint with at least one of the first battery cell 213 and the second battery sub-unit 22. While ensuring that the glue comb 30 is mounted stably, a high mounting efficiency is also achieved, thereby enabling the assembly efficiency of the battery 100 to be effectively enhanced. In addition, this method does not require destroying a structure of the first battery sub-unit 21 and/or the second battery sub-unit 22, and enables the first battery sub-unit 21 and the second battery sub-unit 22 to maintain better operating reliability.

In some embodiments of the present disclosure, the housing 10 includes a base plate 12 configured to support battery unit 20. The battery 100 further includes a sealing member 40 sealingly arranged between the first battery sub-unit 21 and the base plate 12 and/or sealingly arranged between the second battery sub-unit 22 and the base plate 12.

In an exemplary embodiment of the present disclosure, the sealing member 40 may be in the shape of a strip, a sheet, a plate, and so on. In another exemplary embodiment of the present disclosure, the sealing member 40 is in the shape of a sheet or a strip. A thickness of the sealing member 40 is thin, and a thickness direction of the sealing member 40 is the same as an insertion direction of the glue comb 30.

Understandably, the sealing member 40 may be disposed only between the first battery sub-unit 21 and the base plate 12, or may be disposed between the second battery sub-unit 22 and the base plate 12. The sealing member 40 may be disposed between the first battery sub-unit 21 and the base plate 12 at the same time, and between the second battery sub-unit 22 and the base plate 12.

The sealing member 40 is provided to prevent the glue located in the glue filling region 11 from overflowing into a gap between the first battery sub-unit 21 and/or the second battery sub-unit 22 provided on the sealing member 40 and the base plate before being solidified. Therefore, the glue poured into the glue filling region 11 can be gathered in the glue filling region 11, allowing the first battery cell 213 and the second battery sub-unit 22 to have a better adhesive reliability.

In some embodiments of the present disclosure, the first battery sub-unit 21 and the second battery sub-unit 22 are arranged side by side in the first direction X, and both the first battery sub-unit 21 and the second battery sub-unit 22 are the battery cell 213.

The battery cell 213 is the smallest cell that constitutes the battery 100. Each battery cell 213 may be a secondary battery 100 or a primary battery 100, and may further be a lithium sulfur battery 100, a sodium ion battery 100, or a magnesium ion battery 100, but is not limited thereto. The battery cell 213 may be cylindrical, flat, cuboid, or other shapes.

Referring to FIG. 4 and FIG. 5, in some embodiments of the present disclosure, the first battery sub-unit 21 and the second battery sub-unit 22 are arranged side by side in a first direction X. Each of the first battery sub-unit 21 and the second battery sub-unit 22 includes a plurality of battery cells 213 arranged side by side in a third direction Z perpendicular to the first direction X. The third direction Z is a thickness direction of the plurality of battery cells 213.

That is, in this embodiment, the first battery sub-unit 21 and the second battery sub-unit 22 are equivalent to a battery module 100. In an exemplary embodiment of the present disclosure, all battery cells 213 in each battery module 100 may be connected in series, in parallel, or in a mixed connection. The mixed connection refers to both the series connection and the parallel connection in the plurality of battery cells 213.

In this embodiment, each battery cell 213 in the first battery sub-unit 21 further includes a main body and an insulating shell covering an end surface of the main body facing towards the glue comb 30. Each insulating shell has an opening 2121. The main bodies of all battery cells 213 in the first battery sub-unit 21 are combined to form the body 211 of the first battery sub-unit 21. The insulating shells of all battery cells 213 in the first battery sub-unit 21 are combined to form the insulating shell 212 described above.

In this embodiment, the battery 100 has a higher energy density to meet the large capacitance requirement of the electric device.

In some embodiments of the present disclosure, the battery cell 213 includes N battery sub-units 23. The N battery sub-units 23 are sequentially arranged at intervals in the first direction X. N is a natural number, and N ≧ 3. The glue filling region 11 is defined between every two adjacent battery sub-units 23, and a glue comb 30 is disposed in each glue filling region 11.

That is to say, the glue comb 30 is disposed in the glue filling region 11 between the first battery sub-unit 23 and the second battery sub-unit 23, in the glue filling region 11 between the second battery sub-unit 23 and the third battery sub-unit 23,..., in the glue filling region 11 between the (N-1)th battery sub-unit 23 and the N-th battery sub-unit 23. Each glue comb 30 is adhered to at least one battery sub-unit 23 adjacent thereto through the glue.

In this embodiment, the glue comb 30 between every two adjacent battery sub-units 23 is the same as the glue comb 30 described above, and each battery sub-unit 23 is the same as the first battery sub-unit 21 described above, which is not described here again.

First, providing N battery sub-units 23 can improve the energy density of battery 100, meeting the demand for the large capacitance of the electric device. Any two adjacent battery sub-units 23 are spaced apart from each other, which helps to increase a gap between any two adjacent battery sub-units 23. Therefore, each two adjacent battery sub-units 23 has a sufficient creepage distance and electrical clearance, thereby helping to improve the operating safety of the battery.

In addition, each glue comb 30 can occupy a part of the space in the glue filling region 11 where the glue comb 30 is located, thus reducing the amount of glue used in each glue filling region 11. In this embodiment, not only the integrity of the battery unit 20 is improved, but also the assembly cost of the battery 100 can be reduced.

According to some embodiments of the present disclosure, the present disclosure further provides an electric device. The electric device includes the battery 100 of any one of the above aspects, and the battery 100 is configured to provide electrical energy for the electric device.

The electric device may be any of the aforementioned devices or systems to which the battery 100 is applied.

According to some embodiments of the present disclosure, referring to FIG. 2 to FIG. 6, the present disclosure provides the battery 100. The base plate 12 of the housing 10 provides a support for the battery unit 20. The side plate of the housing 10 provides end constraints for the battery unit 20. The battery unit 20 can be sealed in the housing 10 when the top plate covers the end of the side plate away from the base plate 12. The battery unit 20 includes the plurality of battery sub-units 23 arranged at intervals in the first direction X. The glue filling region 11 is formed between each two adjacent battery sub-units 23. Each glue filling region 11 is filled with the glue and the glue comb 30. The glue in the same glue filling region 11 is branched to two sides by the glue comb 30 and connect two adjacent battery sub-units 23 by adhering to the glue comb 30. In this way, a part of the space of each glue filling region 11 can be occupied by the glue comb 30 provided in the glue filling region 11. Therefore, the amount of glue used to fill the glue filling region 11 can be reduced, thereby reducing the assembly cost.

According to some embodiments of the present disclosure, the glue comb 30 further has the glue passage grooves 312 and the glue passage holes 313. The plurality of glue passage grooves 312 and the plurality of glue passage holes 313 are provided and are arranged at intervals in the lengthwise direction of the glue comb 30. The plurality of glue passage grooves 312 corresponds to the plurality of glue passage holes 313 in the height direction of the glue comb 30. Each glue passage groove 312 extends to the base plate 12 in the height of the glue comb 30, and each glue passage hole 313 is located above the corresponding glue passage groove 312. The glue passage groove 312 and the glue passage hole 313 are arranged, which allows the unsolidified adhesive at the two sides of each glue comb 30 to realize convection through the glue passage groove 312 and the glue passage hole 313. Therefore, the unsolidified adhesive can be evenly distributed at the two sides of the glue comb 30 and solidified to form the glue, thereby ensuring better adhesion between every two adjacent battery sub-units 23.

According to some embodiments of the present disclosure, two battery sub-units 23 disposed at the two sides of the same glue comb 30 and adhered to the same glue comb 30 seal respective gaps with the base plate 12 by the same sealing member 40. Therefore, unsolidified adhesive filled between each two adjacent battery sub-units 23 can be prevented from flowing into the gap between each battery sub-unit 23 and the base plate 12, thereby ensuring sufficient adhesive in each glue filling region 11. The reliability of the adhesion between two adj acent battery sub-units 23 is improved.

In order to make the description simple, all possible combinations of the technical features in the foregoing embodiments are not described. However, as long as there is no conflict between the technical features in the embodiments, any combination of technical features in the above-described embodiments may be adopted, which should be considered in the scope of this specification.

The above embodiments illustrate merely some implementations of the present disclosure, which are described in detail but are not construed to limit the scope of the present disclosure. It should be pointed that, for those skilled in the art, without departing from the principle of the present disclosure, various changes and improvements may be made, which are covered by the protection scope of the present disclosure. Therefore, the protection scope of the present disclosure is according to the appended claims.

## Claims

1. A battery (100), comprising:
a housing (10);
a battery unit (20) comprising a first battery sub-unit (21) and a second battery sub-unit (22) arranged side by side in the housing (10), a glue filling region (11) being formed between the first battery sub-unit (21) and the second battery sub-unit (22), and the glue filling region (11) being filled with glue; and
a glue comb (30) at least partially disposed in the glue filling region (11) to connect the first battery sub-unit (21) with the second battery sub-unit (22) by adhering the glue to the glue comb (30).

2. The battery (100) according to claim 1, wherein:
the glue comb (30) has a first surface (314) facing the first battery sub-unit (21) and a second surface (315) facing the second battery sub-unit (22); and
the first battery sub-unit (21) is connected with the second battery sub-unit (22) via the glue adhered to the first surface (314) and the second surface (315).

3. The battery (100) according to any one of claims 1 to 2, wherein the glue comb (30) is provided with a glue passage portion (311) configured to penetrate from the first surface (314) to the second surface (315).

4. The battery (100) according to claim 3, wherein the housing (10) comprises a base plate (12) configured to support the battery unit (20), and the glue passage portion (311) comprises a glue passage groove (312) extending to the base plate (12) in a height direction of the glue comb (30).

5. The battery (100) according to any one of claims 3 to 4, wherein the glue passage portion (311) comprises a plurality of glue passage holes (313), at least two of the plurality of glue passage holes (313) being arranged at intervals in a height direction of the glue comb (30).

6. The battery (100) according to any one of claims 3 to 5, wherein the glue comb (30) comprises an insulating material, and the first battery sub-unit (21) comprises a body (211) and an insulating shell (212), wherein:
the insulating shell (212) is attached to the body (211), and the insulating shell (212) has an opening (2121) formed at a surface of the insulating shell (212) facing the glue comb (30); and
the body (211) is exposed from the opening (2121).

7. The battery (100) according to claim 6, wherein in a penetration direction of the glue portion (311), a projection of a region of the insulating shell (212) excluding the opening (2121) onto the glue comb (30) completely covers the glue passage portion (311).

8. The battery (100) according to any one of claims 3 to 7, wherein:
the housing (10) comprises a base plate (12) configured to support the battery unit (20); and
the glue comb (30) is spaced apart from the base plate (12) in a second direction (Y) perpendicular to the base plate (12) and defines a glue passage with the base plate (12).

9. The battery (100) according to any one of claims 1 to 8, wherein:
the housing (10) comprises a base plate (12);
the first battery sub-unit (21) and the second battery sub-unit (22) are arranged side by side on the base plate (12) in a first direction (X); and
in a direction towards the base plate (12), the glue comb (30) gradually decreases in size in the first direction (X).

10. The battery (100) according to any one of claims 1 to 9, wherein the glue comb (30) comprises a glue combing portion (31) and a position-limiting portion (32), wherein:
the glue combing portion (31) is at least partially disposed in the glue filling region (11); and
the position-limiting portion (32) is disposed at the glue combing portion (31) and configured to limit displacement of the glue combing portion (31).

11. The battery (100) according to claim 10, wherein:
the housing (10) comprises a base plate (12) configured to support the battery unit (20); and
the position-limiting portion (32) is disposed at an end of the glue combing portion (31) away from the base plate (12), and is in an overlap joint with an end surface of the first battery sub-unit (21) and/or an end surface of the second battery sub-unit (22) away from the base plate (12), to limit the displacement of the glue combing portion (31).

12. The battery (100) according to any one of claims 1 to 11, wherein:
the housing (10) comprises a base plate (12) configured to support the battery unit (20); and
the battery (100) further comprises a sealing member (40) sealingly arranged between the first battery sub-unit (21) and the base plate (12) and/or sealingly arranged between the second battery sub-unit (22) and the base plate (12).

13. The battery (100) according to any one of claims 1 to 12, wherein:
the first battery sub-unit (21) and the second battery sub-unit (22) are arranged side by side in a first direction (X); and
each of the first battery sub-unit (21) and the second battery sub-unit (22) comprises a plurality of battery cells (213) arranged side by side in a third direction (Z) perpendicular to the first direction (X), the third direction (Z) being a thickness direction of the plurality of battery cells (213).

14. An electric device, comprising the battery (100) according to any one of claims 1 to 13, the battery (100) configured to supply electrical energy to the electric device.
